# EUROPEAN PATENT APPLICATION

(11) **EP 1 944 859 A2**
(43) Date of publication of application: **16.07.2008**
(21) Application number: 07117144.1
(22) Date of filing: 25.09.2007
(51) Int. Cl.: H02P 6/14, H02P 6/18

(54) **Device and Method of Driving BLDC Motor and Increasing Driving Speed of BLDC Motor**

(30) Priority: 09.01.2007 KR 20070002627
(71) Applicant: Samsung Electronics Co., Ltd., Suwon-si, Gyeonggi-do 442-743 (KR)
(72) Inventor: Park, Pyeong Kl, Gwangju (KR); Kojl, Hamaoka, Gwangsan-gu, Gwangju (KR); Yoo, Han Joo, Sinchang-dong, Gwangsan-gu, Gwangju (KR); Seo, Jeong Ho, Gwangsan-gu, Gwangju (KR); Oh, Kwang Kyo, Gwanju, Ko (KR); Bae, Hun Yub, Buk-gu, Gwangju (KR)
(74) Representative: Grünecker, Kinkeldey, Stockmair & Schwanhäusser Anwaltssozietät

(57) **Abstract**

Disclosed herein are a device and method of driving a brushless DC (BLDC) motor. The device to drive the BLDC motor includes a rectifier which converts an AC voltage into a DC voltage; an inverter which converts the DC voltage into an AC voltage by switching a plurality of power switches and supplies the converted AC voltage to the BLDC motor; and a microcomputer which detects a position of a rotor before a terminal voltage of the BLDC motor exceeds 1/2 of an output voltage of the rectifier and performs phase switching, when a driving speed of the BLDC motor reaches a rated speed.

## Description

### BACKGROUND

### 1. Field of the Invention

The present invention relates to a device and method of driving a brushless DC (BLDC) motor, and more particularly, to a device and method of driving a BLDC motor that can increase the maximum driving speed of the BLDC motor.

### 2. Description of the Related Art

Generally, a BLDC motor indicates a DC motor which uses a semiconductor device instead of a brush. The BLDC motor detects the position of a rotor using a magnetic or optical sensor. Alternatively, the BLDC motor may detect the position of the rotor using a sensorless method.

The sensorless BLDC motor is disclosed in Korean Unexamined Patent Publication No. 1999-81167, in which the position of a rotor is detected by a sensorless detector and the controller of a driving device.

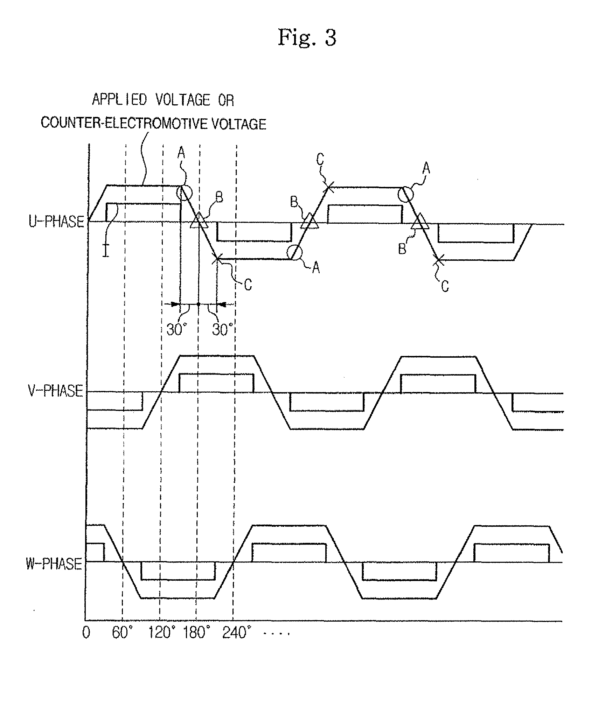

That is, in the sensorless detector, a plurality of comparators compare voltages of phases of the BLDC motor with a reference voltage, as shown in FIG. 3. At this time, an output signal of each comparator is changed at a time point when a terminal voltage of an unexcited phase of the BLDC motor is 1/2 of an output voltage of a rectifier (zero-cross time point of FIG. 3). Then, the controller detects the position of the rotor of the BLDC motor by detecting a variation in the output signal of the comparator.

Meanwhile, the sensorless BLDC motor needs to operate at a rated speed or higher. At this time, the controller of the driving device allows the driving speed of the BLDC motor to exceed the rated speed by advancing a phase switching time point, which is a time point when a power switch of an inverter is turned on/off when the motor is driven at the rated speed. This is referred to as "weak flux control".

However, in the weak flux control used in the conventional device to drive the BLDC motor, the phase switching time point cannot be earlier than the zero-cross time point shown in FIG. 3. Accordingly, the weak flux control range is restricted, and thus the speed of the BLDC motor cannot significantly increase.

### SUMMARY

Therefore, it is an aspect to provide a device and method of driving a BLDC motor, which can increase the weak flux control range.

Additional aspects and/or advantages of the embodiment will be set forth in part in the description which follows and, in part, will be obvious from the description, or may be learned by practice of the invention.

The foregoing and/or other aspects can be achieved by providing a device to drive a brushless DC (BLDC) motor, including: a rectifier which converts an AC voltage into a DC voltage; an inverter which converts the DC voltage into an AC voltage by switching a plurality of power switches and supplies the converted AC voltage to the BLDC motor; and a microcomputer which detects a position of a rotor before a terminal voltage of the BLDC motor exceeds 1/2 of an output voltage of the rectifier and performs phase switching, when a driving speed of the BLDC motor reaches a rated speed.

The BLDC motor may be driven using a two-excitation sensorless driving method and the terminal voltage may be a terminal voltage of an unexcited phase of the three phases of the BLDC motor.

The microcomputer may include a position detecting unit which detects the position of the rotor of the BLDC motor, and the position detecting unit may detect the position of the rotor by detecting any time point of a period when the terminal voltage of unexcited phase is in a range from 0 to 1/2 of the output voltage of the rectifier.

The microcomputer may detect the position of the rotor by detecting a time point when the terminal voltage of the unexcited phase is 1/2 of the output voltage of the rectifier and perform the phase switching, when the driving speed of the BLDC motor is less than the rated speed.

The the time point when the terminal voltage of the unexcited phase is 1/2 of the output voltage of the rectifier is a time point when a pole of a permanent magnet mounted in the rotor passes through the unexcited phase.

The foregoing and/or other aspects are achieved by providing a device to drive a brushless DC (BLDC) motor, including: a rectifier which converts an AC voltage into a DC voltage; an inverter which converts the DC voltage into an AC voltage and supplies the AC voltage to the BLDC motor; and a microcomputer having a position detecting unit detecting a position of a rotor of the BLDC motor by detecting a time point when a terminal voltage is 1/2 of an output voltage of the rectifier when the driving speed of the BLDC motor is less than a rated speed, and by detecting any time point of a period when the terminal voltage is in a range from 0 to 1/2 of the output voltage of the rectifier when the driving speed of the BLDC motor is greater than or equal to the rated speed.

The microcomputer may advance a position detection time point of the rotor and a phase switching time point to increase the weak flux control range when the driving speed of the BLDC motor is greater than or equal to the rated speed.

The foregoing and/or other aspects are achieved by providing a device to drive a brushless DC (BLDC) motor, including: a rectifier which converts an AC voltage into a DC voltage; an inverter which converts the DC voltage into an AC voltage by switching a plurality of power switches and supplies the converted AC voltage to the BLDC motor; and a microcomputer which detects a position of a rotor and performs phase switching before a terminal voltage of the BLDC motor exceeds 1/2 of an output voltage of the rectifier when the BLDC motor is driven.

The foregoing and/or other aspects are achieved by providing a method of driving a brushless DC (BLDC) motor, including: checking the driving speed of the BLDC motor; and detecting a position of a rotor and performing phase switching before a terminal voltage of the BLDC motor exceeds 1/2 of an output voltage of a rectifier, when the driving speed reaches a rated speed.

The method may further include detecting the position of the rotor by detecting a time point when the terminal voltage is 1/2 of the output voltage of the rectifier and performing the phase switching, when the driving speed is less than the rated speed.

The method may further include determining whether the driving speed has reached a desired driving speed, and when it is determined that the driving speed has reached the desired driving speed, determining whether the driving speed is continuously increasing, and when it is determined that the driving speed has not reached the desired driving speed, driving the BLDC motor while maintaining the applied voltages of phases of the motor, a position detection time point of the rotor and a phase switching time point.

When the determination is made as to whether the driving speed is continuously increasing, when the driving speed is determined to be continuously increasing, it is determined that the driving speed has not reached the rated speed, and when the driving speed is determined to not be continuously increasing, it is determined that the driving speed has reached the rated speed.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a block diagram showing a device to drive a BLDC motor according to an embodiment;
FIG. 2 is a flowchart illustrating a method of driving the BLDC motor according to the embodiment; and
FIG. 3 is a view showing a time point when the position of a rotor is detected in the method of driving the BLDC motor illustrated in FIG. 2.

### DETAILED DESCRIPTION OF THE EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

In the present embodiment, a two-excitation sensorless BLDC motor will be described.

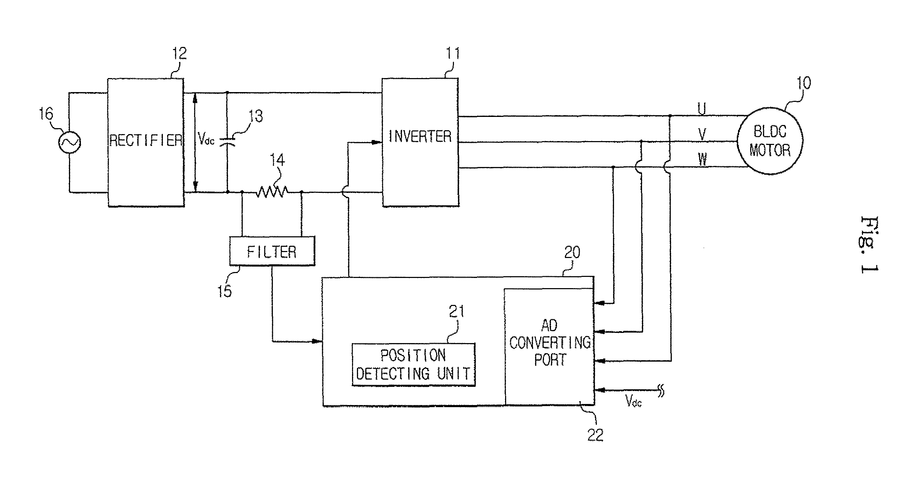

As shown in FIG. 1, the device to drive the BLDC motor according to the embodiment includes a rectifier 12 that converts an AC voltage of an external AC power supply source 16 into a DC voltage, an inverter 11 which converts the DC voltage outputted from the rectifier 12 into an AC voltage by switching a plurality of power switches and which transmits the AC voltage to each phase of the BLDC motor 10, a smoothing capacitor 13, a division resistor 14, a filter 15 to amplify a voltage detected by the division resistor 14, and a microcomputer 20.

The microcomputer 20 includes an A/D converting port 22 which receives the terminal voltages (that is, the voltages of phases) of the BLDC motor 10 and the output voltage of the rectifier 12 and performs A/D conversion, and a position detecting unit 21 which compares the terminal voltages and the output voltage of the rectifier 12 and detects the position of a rotor of the BLDC motor. The position detecting unit 21 has a comparison equation to perform the same function as the comparators of a conventional sensorless detector. When a reference voltage compared with each terminal voltage is changed and substituted for the comparison equation, it is possible to detect the position of the rotor at a desired time point.

For example, if a time point when the terminal voltage of an unexcited phase is 1/2 of the output voltage of the rectifier is detected such that the position of the rotor is detected, 1/2Vdc (direct current voltage) is substituted as the reference voltage and, if a time point when the terminal voltage of the unexcited phase is 1/4 of the output voltage of the rectifier is detected such that the position of the rotor is detected, 1/4Vdc is substituted as the reference voltage. Thus, the result of the comparison equation varies depending on the time point when the terminal voltage of the unexcited phase is 1/2Vdc or 1/4Vdc such that the microcomputer 20 can detect the position of the rotor.

The microcomputer 20 controls the switching of the power switches of the inverter 11 and detects driving current of the BLDC motor 10 using an input voltage of the filter 15.

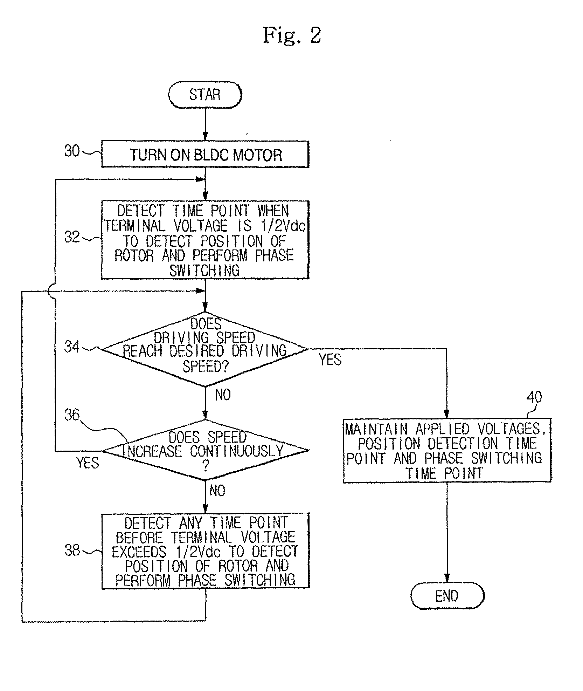

Hereinafter, a method of driving the BLDC motor according to the embodiment will be described with reference to FIGS. 2 and 3. When a main microcomputer (not shown) of an electronic apparatus having the BLDC motor 10 transmits an operation command, the microcomputer 20 applies a voltage to the BLDC motor 10 to turn on the BLDC motor 10 and increases the applied voltage, using PWM control, to increase the driving speed of the BLDC motor 10 (operation 30).

The position detecting unit 21 detects a time point when the voltage of the unexcited phase, among the terminal voltages inputted to the A/D converting port is 1/2 of the output voltage of the rectifier to detect the position of the rotor (operation 32). This time point is a point B shown in FIG. 3, and the three trapezoidal waveforms shown in FIG. 3 indicate applied voltages or counter-electromotive voltages of the phases of the BLDC motor 10. A rectangular waveform included in each trapezoidal waveform indicates current applied to each phase of the BLDC motor 10. The time point when the terminal voltage of the unexcited phase is 1/2Vdc is a time point when a pole of a permanent magnet mounted in the rotor passes through the unexcited phase.

When the position of the rotor is detected, the microcomputer 20 performs phase switching, which is illustrated by point C shown in FIG. 3.

The phase switching indicates an operation to turn on/off the power switches of the inverter 11 in order to allow the phases to be excited or unexcited. A period from the position detection time point of the rotor to the phase switching time point is called a phase switching phase. In FIG. 3, the phase switching phase of operation 32 is, for example, 30°, which is the phase difference between the point B and the point C.

When operation 32 is performed, the driving speed of the BLDC motor 10 is detected. It is determined whether the driving speed of the BLDC motor 10 reaches a desired driving speed (operation 34). The desired driving speed indicates the driving speed of the BLDC motor 10 which is instructed by the main microcomputer.

If the driving speed of the BLDC motor 10 reaches the desired driving speed, the microcomputer 20 continuously drives the BLDC 10 while the applied voltages of the BLDC motor, the position detection time point of the rotor and the phase switching time point are maintained (operation 40). However, if the driving speed of the BLDC motor 10 does not reach the desired driving speed, it is determined whether the driving speed of the BLDC motor 10 is continuously increasing (operation 36).

If the driving speed of the BLDC motor 10 continuously increases, the method returns to operation 32 because it is determined that the driving speed of the BLDC motor 10 has not reached a rated speed. In contrast, if the driving speed of the BLDC motor 10 no longer increases, the microcomputer 20 determines that the driving speed of the BLDC motor 10 reached the rated speed and performs operation 38.

When the voltages applied to the phases of the BLDC motor 10 increase at a speed less than the rated speed, the driving speed of the BLDC motor 10 gradually increases. However, at the rated speed, the voltage applied to each phase become equal to the counter-electromotive voltage and thus the driving speed no longer increases. Accordingly, if the driving speed of the BLDC 10 no longer increases despite the increasing of the applied voltages, it is determined that the BLDC motor 10 has reached the rated speed.

In operation 38, the position detecting unit 21 detects any time point (0 < the terminal voltage of the unexcited phase < 1/2Vdc) before the time point when the terminal voltage of the unexcited phase among the terminal voltages inputted to the A/D converting port 22 is 1/2 of the output voltage of the rectifier to detect the position of the rotor. That is, the position detection time point of the rotor can be selected in a range of 0 < the voltage terminal of the unexcited phase < 1/2Vdc, if necessary (for example, point A shown in FIG. 3). The time point before the terminal voltage of the unexcited phase becomes 1/2Vdc indicates a time point before the pole of the permanent magnet mounted in the rotor passes through the unexcited phase.

When the position of the rotor is detected, the microcomputer 20 performs the phase switching (operation 38). If the microcomputer 20 detects the position of the rotor at a time point when the terminal voltage of the unexcited phase is 0 (e.g., point A shown in FIG. 3) and the phase switching is performed at point C shown in FIG. 3, the phase switching phase being 60°. The phase switching phase may be adjusted, if necessary. In particular, when the phase switching phase is reduced, the phase switching time point is advanced and the direction of the magnetic field generated in the excited phase is changed to offset the magnetic field of the permanent magnet of the rotor to cause the counter-electromotive voltage. Accordingly, the counter-electromotive voltage of the BLDC motor 10 is reduced, and thus the driving speed of the BLDC motor 10 increases.

When the phase switching phase is reduced to 0°, the position of the rotor is detected, and the phase switching is performed at point A. Thus, the counter-electromotive voltage of the BLDC motor 10 significantly decreases. Accordingly, it is possible to increase the adjustment range of the phase switching phase up to twice that of the conventional device which cannot allow the phase switching time point to become earlier than the point B. Thus, the decreased width of the counter-electromotive voltage is higher than that of the conventional device and thus the driving speed of the BLDC motor 10 significantly increases.

As a result, when the position detection time point of the rotor becomes earlier than that of the conventional device, i.e., the time point when the terminal voltage of the unexcited phase is 1/2Vdc, the phase switching time point becomes earlier than that of the conventional device. Accordingly, the weak flux control range of the BLDC motor 10 increases.

When operation 38 is performed, the method returns to operation 34. If the driving speed of the BLDC motor 10 reaches the desired driving speed, the BLDC motor 10 is driven while maintaining the applied voltages of the phases, the position detection time point of the rotor and the phase switching time point (operation 40). However, if the driving speed of the BLDC motor 10 does not reach the desired driving speed, operations 36 and 38 are performed again.

Although, in the present embodiment, the case where the driving speed of the BLDC motor 10 is less than the rated speed and the case where the driving speed of the BLDC motor 10 is greater than or equal to the rated speed are different from each other in the position detection time point of the rotor, the position of the rotor can be detected in the range of 0 < the terminal voltage of the unexcited phase < 1/2Vdc, even when the driving speed of the BLDC motor 10 is less than the rated speed.

As described above, according to the present embodiment, it is possible to increase the weak flux control range by allowing the position detection time point of the rotor and the phase switching time point to become earlier than those of the conventional device.

According to the present embodiment, it is possible to significantly increase a maximum driving speed of the BLDC motor by significantly decreasing the counter-electromotive voltage of the BLDC motor compared with the conventional device.

Although a few embodiments have been shown and described, it would be appreciated by those skilled in the art that changes may be made in these embodiments without departing from the principles and spirit of the invention, the scope of which is defined in the claims and their equivalents.

## Claims

1. A device to drive a brushless DC (BLDC) motor, the device comprising:
a rectifier converting an AC voltage into a DC voltage;
an inverter converting the DC voltage into an AC voltage by switching a plurality of power switches and supplying the converted AC voltage to the BLDC motor; and
a microcomputer detecting a position of a rotor before a terminal voltage of the BLDC motor exceeds 1/2 of an output voltage of the rectifier and performing phase switching, when a driving speed of the BLDC motor reaches a rated speed.

2. The device according to claim 1, wherein the BLDC motor is driven using a two-excitation sensorless driving method, and the terminal voltage is a terminal voltage of an unexcited phase of three phases of the BLDC motor.

3. The device according to claim 2, wherein:
the microcomputer includes a position detecting unit which detects the position of the rotor of the BLDC motor by detecting any time point of a period when the terminal voltage of the unexcited phase is in a range from 0 to 1/2 of the output voltage of the rectifier.

4. The device according to claim 2, wherein the microcomputer detects the position of the rotor by detecting a time point when the terminal voltage of the unexcited phase is 1/2 of the output voltage of the rectifier and performs the phase switching, when the driving speed of the BLDC motor is less than the rated speed.

5. A device to drive a brushless DC (BLDC) motor, the device comprising:
a rectifier converting an AC voltage into a DC voltage;
an inverter converting the DC voltage into an AC voltage and supplying the AC voltage to the BLDC motor; and
a microcomputer having a position detecting unit detecting a position of a rotor of the BLDC motor by detecting a time point when a terminal voltage is 1/2 of an output voltage of the rectifier, when a driving speed of the BLDC motor is less than a rated speed, and by detecting any time point of a period when the terminal voltage is in a range from 0 to 1/2 of the output voltage of the rectifier, when the driving speed of the BLDC motor is greater than or equal to the rated speed.

6. The device according to claim 5, wherein the microcomputer advances a position detection time point of the rotor and a phase switching time point to increase a weak flux control range when the driving speed of the BLDC motor is greater than or equal to the rated speed.

7. A device to driving a brushless DC (BLDC) motor, the device comprising:
a rectifier converting an AC voltage into a DC voltage;
an inverter converting the DC voltage into an AC voltage by switching a plurality of power switches and supplying the converted AC voltage to the BLDC motor; and
a microcomputer detecting a position of a rotor and performing phase switching before a terminal voltage of the BLDC motor exceeds 1/2 of an output voltage of the rectifier when the BLDC motor is driven.

8. A method of driving a brushless DC (BLDC) motor, the method comprising:
checking a driving speed of the BLDC motor; and
detecting a position of a rotor and performing phase switching before a terminal voltage of the BLDC motor exceeds 1/2 of an output voltage of a rectifier, when the driving speed reaches a rated speed.

9. The method according to claim 8, further comprising detecting the position of the rotor by detecting a time point when the terminal voltage is 1/2 of the output voltage of the rectifier and performing the phase switching, when the driving speed is less than the rated speed.

10. The device according to claim 4, wherein the time point when the terminal voltage of the unexcited phase is 1/2 of the output voltage of the rectifier is a time point when a pole of a permanent magnet mounted in the rotor passes through the unexcited phase.

11. The method according to claim 8, further comprising determining whether the driving speed has reached a desired driving speed, and when it is determined that the driving speed has reached the desired driving speed, determining whether the driving speed is continuously increasing, and when it is determined that the driving speed has not reached the desired driving speed, driving the BLDC motor while maintaining the applied voltages of phases of the motor, a position detection time point of the rotor and a phase switching time point.

12. The method according to claim 11, wherein when the determination is made as to whether the driving speed is continuously increasing, when the driving speed is determined to be continuously increasing, it is determined that the driving speed has not reached the rated speed, and when the driving speed is determined to not be continuously increasing, it is determined that the driving speed has reached the rated speed.
